# EUROPÄISCHE PATENTSCHRIFT

(11) **EP 4 285 433 B1**
(45) Veröffentlichungstag und Bekanntmachung des Hinweises auf die Patenterteilung: **07.05.2025**
(21) Anmeldenummer: 22703572.2
(22) Anmeldetag: 25.01.2022
(51) Int. Cl.: H01M 10/615, H01M 10/653

(54) **SPEICHERZELLE FÜR EINEN ELEKTRISCHEN ENERGIESPEICHER MIT ZELL-INTERNER HEIZUNG UND BATTERIE FÜR EIN KRAFTFAHRZEUG**
STORAGE CELL FOR AN ELECTRICAL ENERGY STORE HAVING CELL-INTERNAL HEATING, AND BATTERY FOR A MOTOR VEHICLE
ÉLÉMENT POUR ACCUMULATEUR D'ÉNERGIE ÉLECTRIQUE À CHAUFFAGE INTERNE À L'ÉLÉMENT ET BATTERIE DE VÉHICULE À MOTEUR

(30) Priorität: 27.01.2021 DE 102021101804
(43) Veröffentlichungstag der Anmeldung: 06.12.2023
(73) Patentinhaber: Bayerische Motoren Werke Aktiengesellschaft, 80809 München (DE)
(72) Erfinder: NUERNBERGER, Simon, 83043 Bad Aibling (DE); DANDL, Sonia, 81667 München (DE); ANTWERPEN, Korbinian, 86756 Reimlingen (DE)
(86) Internationale Anmeldenummer: PCT/EP2022/051549
(87) Internationale Veröffentlichungsnummer: WO 2022/161923

(56) Entgegenhaltungen:
- WO-A1-2021/262960
- JP-A- 2012 124 319

## Beschreibung

Die vorliegende Erfindung betrifft eine Zelle zum elektrochemischen Speichern von elektrischer Energie und eine Batterie, die eine solche Zelle aufweist.

Die Leistungsfähigkeit von Lithium-Ionen-Zellen ist temperaturabhängig. Insbesondere bei Zellen mit hohen Energiedichten oder manganreicher Zellchemie oder bei Verwendung von Festelektrolyten ist die Temperaturabhängigkeit der Leistung sehr ausgeprägt. Dabei sinkt die abrufbare Leistung bei tiefen Zelltemperaturen. Auch das Laden der Zellen ist stark temperaturabhängig. Zum Schnellladen soll die Zelltemperatur größer als 20 °C sein. Um die Leistungsfähigkeit von Lithium-Ionen Zellen, die sich bei tiefen Temperaturen befinden, zu erhöhen, werden diese mit einer Heizvorrichtung beheizt, die in der Nähe der zu beheizenden Zellen angeordnet ist. Wird eine Vielzahl von Lithium-Ionen-Zellen von einer einzigen Heizvorrichtung beheizt, dann dauert es lange bis alle Zellen, in ihrem gesamten Zellvolumen ihre Betriebstemperatur erreichen. Die Dauer, bis alle Zellen die Betriebstemperatur erreichen, kann zwar durch Erhöhen der Heiztemperatur der Heizvorrichtung verkürzt werden, jedoch erhöht sich dadurch, insbesondere bei Zellen mit hoher Energiedichte, auch das Risiko eines thermischen Durchgehens (engl. thermal runaway).

In JP 201224319 A wird ein Energiespeicher beschrieben, bei dem zwischen benachbarten Speicherzellen ein wärmeisolierendes Element angeordnet ist, das ein Kühlelement aufweisen kann.

Der vorliegenden Erfindung liegt daher die Aufgabe zugrunde, eine Zelle zum elektrochemischen Speichern von elektrischer Energie bereitzustellen, bei der das Aufheizen auf ihre Betriebstemperatur verbessert und das Risiko eines thermischen Durchgehens der Zelle (durch das Aufheizen selber und auch sonst) minimiert wird. Ferner soll das Übergreifen eines thermischen Durchgehens von einer Zelle auf eine ihr benachbarte Zelle und somit das Risiko einer Propagation eines thermischen Durchgehens auf alle Zellen einer Batterie minimiert werden.

Die Lösung dieser Aufgabe wird gemäß der Lehre des Anspruchs 1 erreicht. Verschiedene Ausführungsformen und Weiterbildungen der Erfindung sind Gegenstand der Unteransprüche.

Der vorliegenden Erfindung liegt ferner die Aufgabe zugrunde, eine Batterie bereitzustellen, bei der das Aufheizen auf ihre Betriebstemperatur verbessert und das Risiko eines thermischen Durchgehens und einer potentiellen Propagation desselben minimiert wird.

Die Lösung dieser Aufgabe wird gemäß der Lehre des Anspruchs 12 erreicht.

Der vorliegenden Erfindung liegt ferner die Aufgabe zugrunde, ein Fahrzeug bereitzustellen, das seine volle Leistungsfähigkeit auch bei tiefen Temperaturen schnell erreicht und sicher ist.

Die Lösung dieser Aufgabe wird gemäß der Lehre des Anspruchs 14 erreicht.

Ein erster Aspekt der Erfindung betrifft eine Zelle zum elektrochemischen Speichern von elektrischer Energie, aufweisend:
eine erste Subzelle und eine zweite Subzelle, die jeweils zum elektrochemischen Speichern von elektrischer Energie ausgebildet sind; und
einen ersten Isolationskörper zur thermischen Isolation der ersten Subzelle und der zweiten Subzelle voneinander, der in einem von einer Seitenfläche der ersten Subzelle und einer Seitenfläche der zweiten Subzelle begrenzten Zwischenraum zwischen der ersten und zweiten Subzelle angeordnet ist,
wobei der erste Isolationskörper ein erstes thermisch isolierendes Material mit einer Wärmeleitfähigkeit von höchstens 1 W/(m·K) und eine erste Heizstruktur aufweist, die ausgebildet ist, die erste Subzelle und die zweite Subzelle zu beheizen, und
wobei der erste Isolationskörper sowohl von der ersten Subzelle als auch von der zweiten Subzelle elektrisch isoliert ist. Vorzugsweise ist das erste thermisch isolierende Material auch schwer entflammbar.

Dadurch kann die Zelle schneller aufgeheizt und das Risiko eines thermischen Durchgehens der Zelle verringert werden.

Eine Subzelle kann als Zell-Stapel oder Zell-Wickel (engl. jelly roll) ausgebildet sein. Eine Subzelle kann eine Lithium-Ionen-Zelle sein. Als thermisch isolierendes Material kann beispielsweise eingesetzt werden: Glasfaser, Kevlar, Glimmer.

Im Sinne der vorliegenden Erfindung ist unter der Wärmeleitfähigkeit der Kehrwert des spezifischen Wärmewiderstandes zu verstehen. Die Wärmeleitfähigkeit (λ) eines thermischen Isolationskörpers, die Wärmestromdichte (dq/dt) durch den thermischen Isolationskörper und der Temperaturunterschied (gradT), welcher die Ursache für den Wärmestrom ist, hängen wie folgt zusammen: dq/dt = -λ·gradT. Die Maßeinheit der Wärmeleitfähigkeit ist: W/(m·K) (Watt durch Meter mal Kelvin).

Im Sinne der vorliegenden Erfindung ist unter der thermischen Masse (C) oder der Wärmekapazität eines Körpers, bspw. einer Subzelle, das Verhältnis zwischen der ihm zugeführten Wärme (dQ) und der damit bewirkten Temperaturerhöhung (dT) zu verstehen: C = dQ/dT. Die Maßeinheit der thermischen Masse ist J/K (Joule durch Kelvin)

Die hier verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Nachfolgend werden bevorzugte Ausführungsformen des ersten Aspektes der Erfindung und deren Weiterbildungen beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

In einer bevorzugten Ausführungsform weist das erste thermisch isolierende Material eine Wärmeleitfähigkeit auf, die kleiner als 0,3 W/(m·K) ist. Dadurch kann das Risiko eines thermischen Durchgehens der Zelle minimiert werden.

Die erste Heizstruktur weist zwei Heizelemente auf.

Weiterhin ist das erste thermisch isolierende Material als Platte ausgebildet, die eine erste Oberfläche und eine der ersten Oberfläche gegenüberliegende zweite Oberfläche aufweist,
stehen die erste Oberfläche und die zweite Oberfläche jeweils einer der den Zwischenraum begrenzenden Seitenflächen der ersten und zweiten Subzelle gegenüber, und
ist auf der ersten Oberfläche und der zweiten Oberfläche jeweils ein Heizelement der ersten Heizstruktur angeordnet.

Dadurch kann die Aufheiztemperatur jedes der Heizelemente soweit herabgesetzt werden, dass das Risiko eines durch das Beheizen mit den Heizelementen ausgelöstes thermischen Durchgehens der Zelle ausgeschlossen wird. Die Aufheiztemperatur eines Heizelementes ist die Temperatur, auf die dieses aufgeheizt werden muss, um die Temperatur der von ihr beheizten Subzelle auf die (optimale) Betriebstemperatur zu erhöhen. Die Aufheiztemperatur kann beispielsweise 70 °C sein. Jedes der beiden Heizelemente kann als (mäanderförmige) Widerstandsbahn ausgebildet sein. Diese Widerstandsbahn kann eines der folgenden oder eine Kombination davon aufweisen: Aluminium, Nickel, Kupfer, Graphen-Silber, Silber-Paste als gedruckte Leiterbahn.

In einer bevorzugten Ausführungsform bedeckt das auf der ersten Oberfläche angeordnete Heizelement mindestens 50% der ersten Oberfläche; und/oder
bedeckt das auf der zweiten Oberfläche angeordnete Heizelement mindestens 50% der zweiten Oberfläche.

Dadurch kann der Anteil des von den zwei Subzellen begrenzten Zwischenraums, der einen über den Wärmewiderstand des ersten thermisch isolierenden Materials hinausgehenden Wärmewiderstand aufweist, erhöht und damit das Risiko eines thermischen Durchgehens der Zelle weiter verringert werden. Der Anteil des Wärmewiderstandes, der über den Wärmewiderstand des ersten thermisch isolierenden Materials hinausgeht, wird dabei von zumindest einem der Heizelemente gebildet.

In einer bevorzugten Ausführungsform entspricht jeder Stelle der ersten Oberfläche, die nicht von dem auf der ersten Oberfläche angeordneten Heizelement bedeckt ist, eine gegenüberliegende Stelle auf der zweiten Oberfläche, die von zumindest einem Teil des auf der zweiten Oberfläche angeordneten Heizelementes bedeckt ist.

Dadurch kann jede Stelle des von den zwei Subzellen begrenzten Zwischenraums einen Wärmewiderstand aufweisen, der über den Wärmewiderstand des ersten thermisch isolierenden Materials hinausgeht, und damit das Risiko eines thermischen Durchgehens der Zelle weiter verringert werden.

In einer bevorzugten Ausführungsform weist zumindest das auf der ersten Oberfläche angeordnete Heizelement Aluminium auf.

Dadurch kann das Heizelement kostengünstig realisiert und sein Anteil am Gesamtwärmewiderstand zwischen der ersten und zweiten Subzelle erhöht werden.

In einer bevorzugten Ausführungsform weisen die erste Subzelle und die zweite Subzelle jeweils eine thermische Masse auf, und
die thermischen Massen der ersten und zweiten Subzelle weichen um nicht mehr als 5% der geringeren der beiden thermischen Massen voneinander ab. Vorzugsweise weichen die thermischen Massen der ersten und zweiten Subzelle um nicht mehr als 1% der geringeren der beiden thermischen Massen voneinander ab.

Dadurch können beide Subzellen gleichstark aufgeheizt und eine relativ zum Isolationskörper symmetrische Temperaturverteilung in den Subzellen erreicht werden.

Eine bevorzugte Ausführungsform weist ferner auf:
eine dritte Subzelle, die zum elektrochemischen Speichern von elektrischer Energie ausgebildet ist, und
einen zweiten Isolationskörper zur thermischen Isolation der zweiten Subzelle und der dritten Subzelle voneinander, der in einem von einer Seitenfläche der zweiten Subzelle und einer Seitenfläche der dritten Subzelle begrenzten Zwischenraum zwischen der zweiten und der dritten Subzelle angeordnet ist,
wobei der zweite Isolationskörper ein zweites thermisch isolierendes Material mit einer Wärmeleitfähigkeit von höchstens 1 W/(m·K) und eine zweite Heizstruktur aufweist, die ausgebildet ist, die zweite Subzelle und die dritte Subzelle zu beheizen, und
wobei der zweite elektrische Isolationskörper sowohl von der zweiten Subzelle als auch von der dritten Subzelle elektrisch isoliert ist. Vorzugsweise ist das zweite thermisch isolierende Material auch schwer entflammbar.

Dadurch kann die in der Zelle gespeicherte weiter Energie erhöht, die Zelle schneller aufgeheizt und das Risiko eines thermischen Durchgehens verringert werden.

In einer bevorzugten Ausführungsform weist das zweite thermisch isolierende Material eine Wärmeleitfähigkeit auf, die kleiner als 0,3 W/(m·K) ist. Dadurch kann das Risiko eines thermischen Durchgehens der Zelle minimiert werden.

Das zweite thermisch isolierende Material kann als Platte ausgebildet sein. Diese Platte kann zwei sich gegenüberliegende Oberflächen aufweisen. Die Oberflächen können jeweils einer der den Zwischenraum begrenzenden Seitenflächen der zweiten und dritten Subzelle gegenüberstehen. Die zweite Heizstruktur kann zwei Heizelemente aufweisen, die jeweils auf einer der sich gegenüberliegenden Oberflächen angeordnet sind. Ferner kann ein Heizelement mindestens 50% der Oberfläche bedecken, auf der es angeordnet ist. Auch kann jeder Stelle einer Oberfläche, die nicht von dem auf dieser Oberfläche angeordneten Heizelement bedeckt ist, eine gegenüberliegende Stelle auf der anderen Oberfläche entsprechen, die von zumindest einem Teil des auf dieser Oberfläche angeordneten Heizelementes bedeckt ist. Zumindest eines der Heizelemente der zweiten Heizstruktur kann Aluminium aufweisen.

Alternativ kann das zweite thermisch isolierende Material aus zwei Platten gebildet sein, und die zweite Heizstruktur weist ein zumindest abschnittsweise zwischen diesen zwei Platten angeordnetes Heizelement auf.

In einer bevorzugten Ausführungsform weisen die erste Subzelle und die dritte Subzelle jeweils eine thermische Masse auf,
die thermischen Massen der ersten und dritten Subzelle weichen um nicht mehr als 5% der geringeren der beiden thermischen Massen voneinander ab; und
weist die zweite Subzelle eine thermische Masse auf, die um nicht mehr als 5% von der doppelten thermischen Masse der dritten Subzelle abweicht. Vorzugsweise weichen die thermischen Massen der ersten und dritten Subzelle um nicht mehr als 1% der geringeren der beiden thermischen Massen voneinander ab; und/oder weist die zweite Subzelle eine thermische Masse auf, die um nicht mehr als 1% von der doppelten thermischen Masse der dritten Subzelle abweicht.

Dadurch können alle drei Subzellen gleichstark aufgeheizt und eine im Wesentlichen homogene Temperaturverteilung in den Subzellen erreicht werden.

In einer bevorzugten Ausführungsform weisen der erste Isolationskörper und der zweite Isolationskörper eine gleiche Bauform auf.

Dadurch kann die Zelle effizient und kostengünstig gebaut werden.

In einer bevorzugten Ausführungsform weisen die erste Subzelle und die zweite Subzelle jeweils auf: eine erste Elektrode, eine ein höheres elektrisches Potential als die erste Elektrode aufweisende zweite Elektrode, und einen Separator, der zwischen den beiden Elektroden angeordnet ist;
ist der erste Isolationskörper allseitig mit Ausnahme eines oder mehrerer mit der ersten Heizstruktur verbundener elektrischer Anschlüsse von einer elektrolytstabilen Folie umschlossen;
isoliert die elektrolytstabile Folie zugleich den ersten Isolationskörper von der ersten Subzelle und von der zweiten Subzelle elektrisch; und
sind die erste Subzelle, die zweite Subzelle und der in dem Zwischenraum zwischen der ersten und zweiten Subzelle angeordnete und von der elektrolytstabilen Folie umschlossene Teil des ersten Isolationskörpers in einem flüssigen Elektrolyten eingetaucht. Die elektrolytstabile Folie kann aufweisen: Kapton, PET (Polyethylenterephthalat), PEN (Polyethylennaphthalat), PP (Polypropylen), PE (Polyethylene).

Dadurch kann eine einen flüssigen Elektrolyten aufweisende Zelle zellintern (d.h. durch die in dem ersten und/oder zweiten Isolationskörper vorgesehene Heizstruktur) beheizt werden.

In einer bevorzugten Ausführungsform weisen die erste Subzelle und die zweite Subzelle jeweils auf: eine erste Elektrode, eine ein höheres elektrisches Potential als die erste Elektrode aufweisende zweite Elektrode, und einen Festkörperelektrolyten, der zwischen den beiden Elektroden angeordnet ist.

Dadurch kann eine Zelle mit einem Festkörperelektrolyt beheizt werden.

In einer bevorzugten Ausführungsform weist das erste thermisch isolierende Material ferner eine der folgenden Eigenschaften oder eine Kombination davon auf: komprimierbar, elastisch, nach DIN 4102-1 schwer entflammbar. Auch das zweite thermisch isolierende Material kann eine dieser Eigenschaften oder eine Kombination davon aufweisen.

Dadurch kann der Isolationskörper das Ausbauchen der Subzellen während Lade- oder Entladevorgängen aufnehmen, insbesondere auch elastisch. Oder das thermisch isolierende Material kann seine thermischen Isolationseigenschaften auch bei Überhitzung lange beibehalten.

Ein zweiter Aspekt der Erfindung betrifft eine Batterie, aufweisend eine erfindungsgemäße Zelle.

Die in Bezug auf den ersten Aspekt der Erfindung erläuterten Merkmale und Vorteile gelten entsprechend auch für den zweiten Aspekt der Erfindung.

Ein dritter Aspekt der Erfindung betrifft ein Fahrzeug, aufweisend eine erfindungsgemäße Batterie.

Dadurch kann ein Fahrzeug, insbesondere eines mit Elektroantrieb, bereitgestellt werden, das seine volle Leistungsfähigkeit auch bei tiefen Temperaturen schnell erreicht und sicher ist.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt
- **Fig. 1a**: schematisch eine Zelle zum elektrochemischen Speichern von elektrischer Energie gemäß einer ersten Ausführungsform;
- **Fig. 1b**: schematisch die innere Struktur eines Isolationskörpers zur thermischen Isolation und zum Beheizen von zwei Subzellen einer Zelle;
- **Fig. 1c**: schematisch ein in einem Isolationskörper zum Beheizen von zwei Subzellen vorgesehenes Heizelement;
- **Fig. 2**: schematisch die innere Struktur eines anderen Isolationskörpers zur thermischen Isolation und zum Beheizen von zwei Subzellen; und
- **Fig. 3**: schematisch eine Zelle zum elektrochemischen Speichern von elektrischer Energie gemäß einer zweiten Ausführungsform.

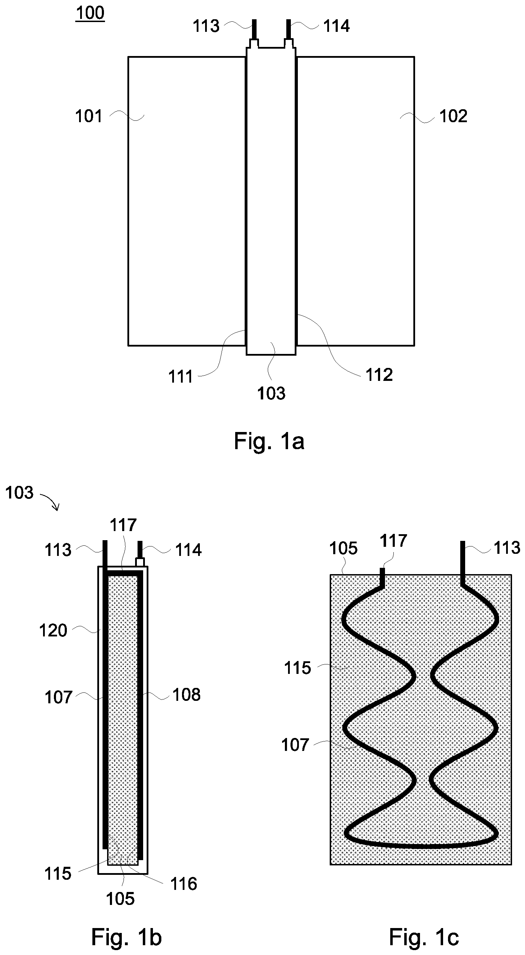

Die **Figur 1a** zeigt schematisch eine Zelle 100 zum elektrochemischen Speichern von elektrischer Energie gemäß einer ersten Ausführungsform. Die Zelle 100 weist auf: eine Subzelle 101 und eine Subzelle 102, die jeweils zum elektrochemischen Speichern von elektrischer Energie ausgebildet sind; und einen Isolationskörper 103 zur thermischen Isolation der Subzelle 101 und der Subzelle 102 voneinander. Der Isolationskörper 103 ist in einem von einer Seitenfläche 111 der Subzelle 101 und einer Seitenfläche 112 der Subzelle 102 begrenzten Zwischenraum zwischen den Subzellen 101 und 102 angeordnet. Um ein Übergreifen eines thermischen Durchgehens von einer Subzelle auf die andere zu verhindern oder zumindest ausreichend lange hinauszuzögern, weist der Isolationskörper 103 ein thermisch isolierendes Material mit einer Wärmeleitfähigkeit von höchstens 1,0 W/(m·K) auf. Vorzugsweise ist die Wärmeleitfähigkeit des thermisch isolierenden Materials kleiner als 0,3 W/(m·K). Das thermisch isolierende Material kann aufweisen: Glasfaser, Kevlar, Glimmer. Ferner ist der Isolationskörper 103 sowohl von der Subzelle 101 als auch von der Subzelle 102 elektrisch isoliert.

Der Isolationskörper 103 ist weiterhin dazu ausgebildet, die Subzelle 101 und die Subzelle 102 zu beheizen. Dafür weist dieser eine Heizstruktur mit zwei elektrischen Anschlüssen 113 und 114 auf, über die die Heizstruktur mit einer Stromquelle verbindbar ist. Zum Beheizen der Subzellen wird die Heizstruktur mit der Stromquelle verbunden, und die in der Heizstruktur erzeugte Wärme an die dem Isolationskörper benachbarten Subzellen im Wesentlichen durch Wärmeleitung übertragen. Die Heizstruktur und/oder die Stromquelle sind so konfiguriert, dass beim Beheizen der Subzellen die Temperatur der Heizstruktur (Aufheiztemperatur) auf einen vorgegebenen Wert beschränkt ist. Dieser vorgegebene Wert ist einerseits so bemessen, ein Überheizen einer der beiden Subzellen 101 und 102 (was ein thermisches Durchgehen in der überheizten Subzelle auslösen könnte) zu verhindern, und andererseits, die beiden Subzellen 101 und 102 schnellstmöglich auf ihre optimale Betriebstemperatur aufzuheizen.

Die **Figur 1b** zeigt schematisch einen Schnitt durch den Isolationskörper 103 in einer Ebene, die senkrecht zu den (den Zwischenraum begrenzenden) Seitenflächen 111 und 112 ist und durch den elektrischen Anschluss 113 geht. Gemäß dieser Figur ist i) das thermisch isolierende und schwer entflammbare Material als Platte 105 ausgebildet, welche eine Oberfläche 115 und eine dieser gegenüberliegende Oberfläche 116 hat; ii) weist die Heizstruktur zwei Heizelemente 107 und 108 auf, die jeweils auf einer der gegenüberliegenden Oberflächen 115 und 116 angeordnet sind; und iii) sind die Platte und die Heizstruktur mit Ausnahme der elektrischen Anschlüsse mit einer elektrisch isolierenden Folie 120 umhüllt. Die Heizelemente 107 und 108 sind über die elektrischen Anschlüsse mit einer Stromquelle verbindbar und können in Serie oder parallel geschaltet sein. Die Platte 105 ist vorzugsweise quaderförmig. Die elektrisch isolierende Folie 120 ist elektrolytbeständig und kann aufweisen: Kapton, PET, PEN, PP, PE.

Die **Figur 1c** zeigt eine Draufsicht auf die Oberfläche 115. Sie zeigt eine mäanderförmige Anordnung des Heizelementes 107 auf der Oberfläche 115, seine Verbindung mit dem elektrischen Anschluss 113 und eine elektrische Verbindungsleitung 117, welche (im Falle einer Reihenschaltung) das Heizelement 107 mit dem auf der Oberfläche 116 angeordneten Heizelement 108 verbindet. Das Heizelement 108 kann ebenfalls mäanderförmig auf der Oberfläche 116 angeordnet sein und ist mit dem elektrischen Anschluss 114 verbunden. Das ist in den Figuren nicht gezeigt. Ein Heizelement kann aufweisen: Nickel, Kupfer, Aluminium, Graphen-Silber, Silber-Paste als gedruckte Leiterbahn.

In vorteilhafter Weise bedeckt das Heizelement 107 mindestens 50 % der Oberfläche 115 und/oder das Heizelement 108 bedeckt mindestens 50 % der Oberfläche 116. Ferner ist es vorteilhaft, wenn der (mäanderförmige) Verlauf der Heizelemente 107 und 108 so gewählt ist, dass jeder Stelle der Oberfläche 115, die nicht von dem Heizelement 107 bedeckt ist, eine gegenüberliegende Stelle auf der Oberfläche 116 entspricht, die von zumindest einem Teil des Heizelementes 108 bedeckt ist. Dadurch kann die Wärmeleitfähigkeit des Isolationskörpers 103 weiter gesenkt werden.

In der Zelle 100 steht die Oberfläche 115 der Seitenfläche 111 gegenüber, sodass das Heizelement 107 näher an der Subzelle 101 angeordnet ist als an der Subzelle 102. Auch ist der Wärmewiderstand vom Heizelement 107 zur Subzelle 102 hin durch die thermisch isolierende Platte 105 wesentlich höher als der Wärmewiderstand vom Heizelement 107 zur Subzelle 101 hin. Das alles führt dazu, dass sich die vom Heizelement 107 erzeugte Wärme überwiegend in Richtung der Subzelle 101 ausbreitet und zum Beheizen derselben beiträgt. In analoger Weise breitet sich die vom Heizelement 108 erzeugte Wärme überwiegend in Richtung der Subzelle 102 aus und trägt vorwiegend zum Beheizen derselben bei. Die Temperatur, auf die jedes der Heizelemente 107 und 108 aufgeheizt werden muss, um die Subzellen 101 und 102 auf ihre optimale Betriebstemperatur zu bringen, kann auf 70° oder darunter herabgesetzt werden. Bei dieser Temperatur ist ein durch die Heizelemente ausgelöstes thermisches Durchgehen nicht zu erwarten.

Die beim Beheizen der Zelle 100 von dem Heizelement 107 erzeugte Wärme entspricht daher im Wesentlichen der Wärme, die erforderlich ist, um die Subzelle 101 auf die optimale Betriebstemperatur aufzuheizen. Analog entspricht die von dem Heizelement 108 erzeugte Wärme im Wesentlichen der Wärme, die erforderlich ist, um die Subzelle 102 auf die optimale Betriebstemperatur aufzuheizen. In vorteilhafter Weise sind die thermischen Massen (Wärmekapazitäten) der Subzellen 101 und 102 gleich. Dann lässt sich bei gleicher Heizleistung der Heizelemente 107 und 108 in der Zelle eine relativ zum Isolationskörper symmetrische Temperaturverteilung und ein im Wesentlichen gleichförmiges Beheizen der Zelle erreichen.

Die Subzellen einer Zelle sind beispielsweise Lithium-Ionen-Zellen und können als Zell-Stapel oder Zell-Wickel (Jelly Role) ausgebildet sein. Beispielsweise können die Subzellen 101 und 102 ausgebildet sein: beide als Zell-Stapel, beide als Zell-Wickel, eine als Zell-Stapel und die andere als Zell-Wickel. Ferner weist jede Subzelle einer Zelle auf: eine erste Elektrode, eine ein höheres elektrisches Potential als die erste Elektrode aufweisende zweite Elektrode, und einen Separator oder einen Festkörperelektrolyten, der zwischen den beiden Elektroden angeordnet ist. Im Falle einer Zelle mit einem flüssigen Elektrolyten ist die Folie, die das thermisch isolierende Material und die Heizstruktur umhüllt, auch elektrolytstabil.

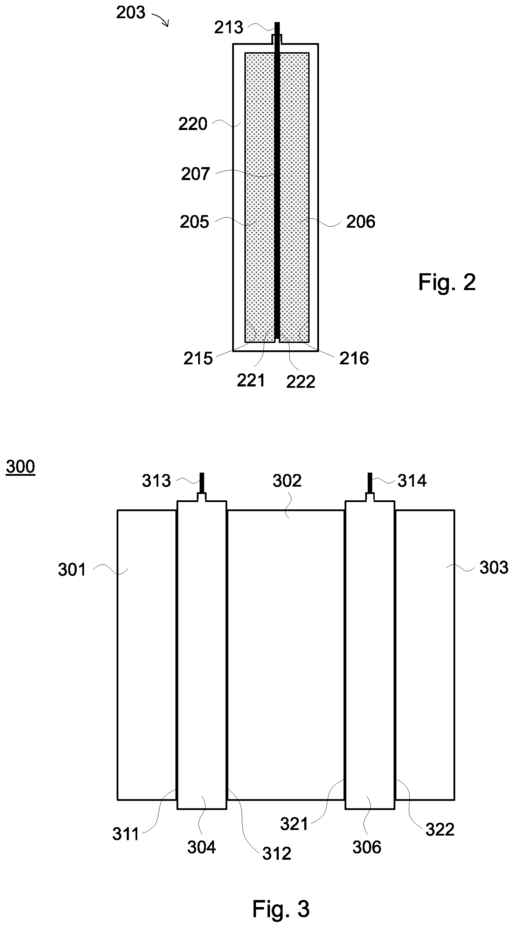

Eine Abwandlung der ersten Ausführungsform, die nicht sämtliche Merkmale der Erfindung aufweist, kann durch Ersetzen des Isolationskörpers 103 mit einem anderen, in der **Figur 2** schematisch gezeigten, Isolationskörper 203 erreicht werden. Auch der Isolationskörper 203 weist ein thermisch isolierendes Material mit einer Wärmeleitfähigkeit von höchstens 1,0 W/(m·K) auf und ist von den Subzellen elektrisch isoliert. Vorzugsweise ist die Wärmeleitfähigkeit des thermisch isolierenden Materials kleiner als 0,3 W/(m·K). Das thermisch isolierende Material kann aufweisen: Glasfaser, Kevlar, Glimmer.

Der Isolationskörper 203 ist ausgebildet, die ihm benachbarten Subzellen zu beheizen, und weist eine Heizstruktur mit zwei elektrischen Anschlüssen 213 auf. Zum Beheizen der Subzellen wird die Heizstruktur mit einer Stromquelle verbunden, und die in der Heizstruktur erzeugte Wärme an die Subzellen im Wesentlichen durch Wärmeleitung übertragen. Die Aufheiztemperatur ist auf einen vorgegebenen Wert begrenzt, um ein Überheizen der Zelle verhindern.

Die Figur 2 zeigt einen Schnitt durch den Isolationskörper 203 in einer Ebene, die senkrecht zur der Ebene ist, welche die Heizstruktur enthält, und durch einen der elektrischen Anschlüsse 213 geht. Das thermisch isolierende Material des Isolationskörpers 203 wird aus zwei parallelen, sich gegenüberstehenden und scher entflammbaren Platten 205 und 206 gebildet, und die Heizstruktur weist ein zwischen den zwei Platten angeordnetes Heizelement 207 auf. Die Platten 205 und 206 und die Heizstruktur mit Ausnahme der elektrischen Anschlüsse 213 sind mit einer elektrisch isolierenden und elektrolytstabilen Folie 220 umhüllt. Jede der Platten 205 und 206 weist zwei gegenüberliegende, parallele Oberflächen auf: die Platte 205 die Oberflächen 215 und 221, die Platte 206 die Oberflächen 216 und 222. Das Heizelement 207 ist auf einer der Oberflächen 221 oder 222 angeordnet, bspw. so wie das in der Figur 1c gezeigte Heizelement 107. In vorteilhafter Weise bedeckt das Heizelement 207 mindestens 50% der Oberfläche und/oder weist zumindest eines der folgenden auf: Nickel, Kupfer, Aluminium, Graphen-Silber, Silber-Paste als gedruckte Leiterbahn. Die Platten 205 und 206 sind vorzugsweise quaderförmig und/oder haben die gleiche Bauform.

Eine Zelle gemäß der abgewandelten ersten Ausführungsform - diese ist in den Figuren nicht dargestellt - weist daher auf: eine erste Subzelle und eine zweite Subzelle, die jeweils zum elektrochemischen Speichern von elektrischer Energie ausgebildet sind; und den Isolationskörper 203 zur thermischen Isolation der ersten Subzelle und der zweiten Subzelle, welcher in einem von einer Seitenfläche der erstens Subzelle und einer Seitenfläche der zweiten Subzelle begrenzten Zwischenraum zwischen der ersten und zweiten Subzelle angeordnet. Dabei steht die Oberfläche 215 der den Zwischenraum begrenzenden Seitenfläche der ersten Subzelle gegenüber, und die Oberfläche 216 der den Zwischenraum begrenzenden Seitenfläche der zweiten Subzelle.

Weil bei einer Zelle gemäß der abgewandelten ersten Ausführungsform zwischen dem Heizelement 207 und den Subzellen jeweils eine thermisch isolierende Platte liegt, ist die Aufheiztemperatur des Heizelementes 207 höher als bei den Heizelementen des Isolationskörpers 103. Ein mit dem Isolationskörper 103 vergleichbar schnelles und sicheres Beheizen der Subzellen lässt sich mit dem Isolationskörper 203 erreichen, wenn seine Aufheiztemperatur in einem Bereich zwischen 120 °C und 150 °C liegt.

In vorteilhafter Weise sind die thermischen Massen der ersten Subzelle und der zweiten Subzelle gleich. Dadurch lässt sich ein im Wesentlichen gleichförmiges Beheizen erreichen.

Die **Figur 3** zeigt schematisch eine Zelle 300 zum elektrochemischen Speichern von elektrischer Energie gemäß einer zweiten Ausführungsform. Die Zelle 300 weist auf: eine Subzelle 301, eine Subzelle 302 und eine Subzelle 303, die jeweils zum elektrochemischen Speichern von elektrischer Energie ausgebildet sind; einen Isolationskörper 304 zur thermischen Isolation der Subzelle 301 und der Subzelle 302 voneinander; und einen Isolationskörper 306 zur thermischen Isolation der Subzelle 302 und der Subzelle 303 voneinander. Der Isolationskörper 304 ist in einem von einer Seitenfläche 311 der Subzelle 301 und einer Seitenfläche 312 der Subzelle 302 begrenzten Zwischenraum zwischen den Subzellen 301 und 302 angeordnet; und der Isolationskörper 306 ist in einem von einer Seitenfläche 321 der Subzelle 302 und einer Seitenfläche 322 der Subzelle 303 begrenzten Zwischenraum zwischen den Subzellen 302 und 303 angeordnet. Die Isolationskörper 304 und 306 sind von den Subzellen elektrisch isoliert und weisen jeweils elektrische Anschlüsse 313 und 314 auf, über die sie mit einer Stromquelle verbindbar sind. Jeder der Isolationskörper 304 und 306 ist wie einer der Isolationskörper 103 oder 203 ausgebildet. Deswegen wird auf ihre Struktur nicht weiter eingegangen. Die Isolationskörper 304 und 306 können die gleiche Bauform haben, insbesondere gleich ausgebildet sein.

In vorteilhafter Weise sind die thermischen Massen der Subzelle 301 und der Subzelle 303 gleich und die Subzelle 302 weist eine zweimal größere thermische Masse auf als eine der Subzellen 301 und 303. Bei gleicher Heizleistung der in den Isolationskörper integrierten Heizstrukturen lässt sich dann ein im Wesentlichen gleichförmiges Beheizen der Subzellen 301, 302 und 303 realisieren.

Eine Zelle gemäß der dritten Ausführungsform - diese ist in den Figuren nicht dargestellt - weist auf: n Subzellen, wobei n eine natürliche Zahl ist, die jeweils zum elektrochemischen Speichern von elektrischer Energie ausgebildet sind; und n-1 Isolationskörper, die von den n Subzellen elektrisch isoliert und jeweils wie einer der Isolationskörper 103 oder 203 ausgebildet sind. Jeder k-te Isolationskörper, wobei k natürliche Werte zwischen 1 und n-1 annimmt, ist zur thermischen Isolation der k-ten Subzelle und der k+1-ten Subzelle vorgesehen und ist in einem von einer Seitenfläche der k-ten Subzelle und einer Seitenfläche der k+1-ten Subzelle begrenzten Zwischenraum zwischen der k-ten und der k+1-ten Subzelle angeordnet. Die n-1 Isolationskörper haben vorzugsweise die gleiche Bauform.

In vorteilhafter Weise weichen die thermischen Massen der ersten und n-ten Subzelle um nicht mehr als 5%, bevorzugt 1%, der geringeren der thermischen Massen der ersten und n-ten Subzelle voneinander ab, weichen die thermischen Massen aller anderen Subzellen (also der zweiten, der dritten, ... und der (n-1)-ten Subzelle) um nicht mehr als 5%, bevorzugt 1%, der geringeren der thermischen Massen der anderen Subzellen voneinander ab, und weichen die thermischen Massen der anderen Subzellen jeweils um nicht mehr als 5%, bevorzugt 1%, von der doppelten thermischen Masse der geringeren der thermischen Massen der ersten und n-ten Subzelle voneinander ab. Vorzugsweise sind die thermischen Massen der ersten und n-ten Subzelle gleich, die thermischen Massen aller anderen Subzellen (also der zweiten, der dritten, ... und der (n-1)-ten Subzelle) gleich, und sind die thermischen Massen der anderen Subzellen jeweils zweimal größer als die thermische Masse der ersten oder n-ten Subzelle. Bei gleicher Heizleistung der n-1 Heizelemente lässt sich dann ein im Wesentlichen gleichförmiges Beheizen der n Subzellen erreichen.

In vorteilhafter Weise ist das thermisch isolierende Material, aus dem die Platte 105 bzw. die Platten 205 und 206 ausgebildet sind, soweit komprimierbar, dass es das Ausbauchen der Subzellen aufnehmen kann. Ferner ist es vorteilhaft, wenn das thermisch isolierende Material (bspw. nach DIN 4102-1) schwer entflammbar ist.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Zelle
- 101, 102: Subzellen
- 103: Isolationskörper
- 105: Thermisch isolierendes Material (Platte)
- 107, 108: Heizelemente einer Heizstruktur
- 111, 112: Seitenflächen von zwei benachbarten Subzellen, die den Zwischenraum zwischen diesen zwei Subzellen begrenzen
- 113, 114: Elektrische Anschlüsse
- 115, 116: Oberflächen des thermisch isolierenden Materials
- 117: Elektrische Verbindung
- 120, 220: Elektrisch isolierende und elektrolytstabile Folie
- 203: Isolationskörper
- 205, 206: Thermisch isolierende und schwer entflammbare Platten
- 207: Heizelement einer anderen Heizstruktur
- 213: Elektrische Anschlüsse
- 215, 221: Oberflächen einer thermisch isolierenden Platte
- 216, 222: Oberflächen einer anderen thermisch isolierenden Platte
- 300: Zelle
- 301...303: Subzellen
- 304, 306: Isolationskörper
- 311, 312: Seitenflächen von zwei benachbarten Subzellen, die den Zwischenraum zwischen diesen zwei Subzellen begrenzen
- 313, 314: Elektrische Anschlüsse
- 321, 322: Seitenflächen von zwei anderen benachbarten Subzellen, die den Zwischenraum zwischen diesen zwei Subzellen begrenzen

## Patentansprüche

1. Zelle zum elektrochemischen Speichern von elektrischer Energie, aufweisend:
eine erste Subzelle (101; 301) und eine zweite Subzelle (102; 302), die jeweils zum elektrochemischen Speichern von elektrischer Energie ausgebildet sind; und
einen ersten elektrolytstabilen Isolationskörper (103; 304) zur thermischen Isolation der ersten Subzelle und der zweiten Subzelle voneinander, der in einem von einer Seitenfläche (111; 311) der ersten Subzelle und einer Seitenfläche (112; 312) der zweiten Subzelle begrenzten Zwischenraum zwischen der ersten und zweiten Subzelle angeordnet ist,
wobei der erste Isolationskörper ein erstes thermisch isolierendes Material (105; 205, 206) mit einer Wärmeleitfähigkeit von höchstens 1 W/(m·K) und eine erste Heizstruktur aufweist, die ausgebildet ist, die erste Subzelle (101; 301) und die zweite Subzelle (102; 302) zu beheizen,
wobei der erste Isolationskörper sowohl von der ersten Subzelle als auch von der zweiten Subzelle elektrisch isoliert ist,
wobei die erste Heizstruktur zwei Heizelemente (107, 108) aufweist, das erste thermisch isolierende Material (105) als Platte ausgebildet ist, die eine erste Oberfläche (115) und eine der ersten Oberfläche gegenüberliegende zweite Oberfläche (116) aufweist,
die erste Oberfläche und die zweite Oberfläche jeweils einer der den Zwischenraum begrenzenden Seitenflächen der ersten und zweiten Subzellen gegenüberstehen, und
auf der ersten Oberfläche (115) und der zweiten Oberfläche (116) jeweils ein Heizelement (107, 108) der ersten Heizstruktur angeordnet ist.

2. Zelle nach Anspruch 1, wobei das auf der ersten Oberfläche (115) angeordnete Heizelement mindestens 50% der ersten Oberfläche bedeckt; oder
das auf der zweiten Oberfläche (116) angeordnete Heizelement mindestens 50% der zweiten Oberfläche, bedeckt.

3. Zelle nach Anspruch 2, wobei jeder Stelle der ersten Oberfläche (115), die nicht von dem auf der ersten Oberfläche angeordneten Heizelement (107) bedeckt ist, eine gegenüberliegende Stelle auf der zweiten Oberfläche (116) entspricht, die von zumindest einem Teil des auf der zweiten Oberfläche angeordneten Heizelementes (108) bedeckt ist.

4. Zelle nach einem der vorangehenden Ansprüche, wobei zumindest das auf der ersten Oberfläche (115) angeordnete Heizelement (107) Aluminium aufweist.

5. Zelle nach einem der vorangehenden Ansprüche, wobei die erste Subzelle (101) und die zweite Subzelle (102) jeweils eine thermische Masse aufweisen, und
die thermischen Massen der ersten und zweiten Subzelle um nicht mehr als 5%, vorzugsweise 1%, der geringeren der beiden thermischen Massen voneinander abweichen.

6. Zelle nach einem der Ansprüche 1 bis 4, ferner aufweisend:
eine dritte Subzelle (303), die zum elektrochemischen Speichern von elektrischer Energie ausgebildet ist; und
einen zweiten Isolationskörper (306) zur thermischen Isolation der zweiten Subzelle (302) und der dritten Subzelle (303) voneinander, der in einem von einer Seitenfläche (321) der zweiten Subzelle und einer Seitenfläche (322) der dritten Subzelle begrenzten Zwischenraum zwischen der zweiten und der dritten Subzelle angeordnet ist,
wobei der zweite Isolationskörper (306) ein zweites thermisch isolierendes Material (105; 205, 206) mit einer Wärmeleitfähigkeit von höchstens 1,0 W/(m·K) und eine zweite Heizstruktur aufweist, die ausgebildet ist, die zweite Subzelle (302) und die dritte Subzelle (303) zu beheizen, und
wobei der zweite elektrische Isolationskörper (306) sowohl von der zweiten Subzelle (302) als auch von der dritten Subzelle (303) elektrisch isoliert ist.

7. Zelle nach Anspruch 6, wobei die erste Subzelle (301) und die dritte Subzelle (303) jeweils eine thermische Masse aufweisen,
die thermischen Massen der ersten und dritten Subzelle um nicht mehr als 5%, vorzugsweise 1%, der geringeren der beiden thermischen Massen voneinander abweichen; und
die zweite Subzelle (302) eine thermische Masse aufweist, die um nicht mehr als 5%, vorzugsweise 1%, von der doppelten thermischen Masse der dritten Subzelle (303) abweicht.

8. Zelle nach Anspruch 6 oder 7, wobei der erste Isolationskörper (304) und der zweite Isolationskörper (306) eine gleiche Bauform aufweisen.

9. Zelle nach einem der vorangehenden Ansprüche, wobei:
die erste Subzelle (101; 301) und die zweite Subzelle (102; 302) jeweils aufweisen: eine erste Elektrode, eine ein höheres elektrisches Potential als die erste Elektrode aufweisende zweite Elektrode, und einen Separator, der zwischen den beiden Elektroden angeordnet ist;
der erste Isolationskörper (103; 304) allseitig mit Ausnahme eines oder mehrerer mit der ersten Heizstruktur (107, 108; 207) verbundener elektrischer Anschlüsse (113, 114; 313) von einer elektrolytstabilen Folie (120; 220) umschlossen ist;
die elektrolytstabile Folie (120; 220) zugleich den ersten Isolationskörper (103; 304) von der ersten Subzelle (101; 301) und von der zweiten Subzelle (102; 302) elektrisch isoliert; und
die erste Subzelle (101; 301), die zweite Subzelle (102; 302) und der in dem Zwischenraum zwischen der ersten und zweiten Subzelle angeordnete und von der elektrolytstabilen Folie (120; 220) umschlossene Teil des ersten Isolationskörpers (103; 304) in einem flüssigen Elektrolyten eingetaucht sind.

10. Zelle nach einem der Ansprüche 1 bis 8, wobei die erste Subzelle (101; 301) und die zweite Subzelle (102; 302) jeweils aufweisen: eine erste Elektrode, eine ein höheres elektrisches Potential als die erste Elektrode aufweisende zweite Elektrode, und einen Festkörperelektrolyten, der zwischen den beiden Elektroden angeordnet ist.

11. Zelle nach einem der vorangehenden Ansprüche, wobei das erste thermisch isolierende Material oder das zweite thermisch isolierende Material nach DIN 4102-1 schwer entflammbar ist.

12. Zelle nach einem der vorangehenden Ansprüche, wobei das erste thermisch isolierende Material eine Wärmeleitfähigkeit aufweist, die kleiner als 0,3 W/(m·K) ist, oder
das zweite thermisch isolierende Material eine Wärmeleitfähigkeit aufweist, die kleiner als 0,3 W/(m·K) ist.

13. Batterie, aufweisend eine Zelle (100; 300) gemäß einem der vorangehenden Ansprüche.

14. Fahrzeug, aufweisend eine Batterie gemäß Anspruch 13.

## Claims

1. Cell for electrochemically storing electrical energy, comprising:
a first subcell (101; 301) and a second subcell (102; 302), which are each designed for electrochemically storing electrical energy; and
a first electrolyte-stable insulating body (103; 304) for thermally insulating the first subcell and the second subcell from each other, said body being arranged in an interspace between the first and second subcells that is confined by a side face (111; 311) of the first subcell and a side face (112; 312) of the second subcell,
wherein the first insulating body comprises a first thermally insulating material (105; 205, 206) having a thermal conductivity of at most 1 W/(m·K) and comprises a first heating structure which is designed to heat the first subcell (101; 301) and the second subcell (102; 302),
wherein the first insulating body is electrically insulated both from the first subcell and from the second subcell,
wherein the first heating structure comprises two heating elements (107, 108), the first thermally insulating material (105) is designed as a plate which has a first surface (115) and a second surface (116) opposite the first surface,
the first surface and the second surface each face one of the interspace-confining side faces of the first and second subcells, and
a heating element (107, 108) of the first heating structure is arranged on each of the first surface (115) and the second surface (116).

2. Cell according to Claim 1, wherein the heating element arranged on the first surface (115) covers at least 50% of the first surface; or the heating element arranged on the second surface (116) covers at least 50% of the second surface.

3. Cell according to Claim 2, wherein each point on the first surface (115) which is not covered by the heating element (107) arranged on the first surface has a corresponding opposite point on the second surface (116) which is covered by at least part of the heating element (108) arranged on the second surface.

4. Cell according to any of the preceding claims, wherein at least the heating element (107) arranged on the first surface (115) comprises aluminium.

5. Cell according to any of the preceding claims, wherein the first subcell (101) and the second subcell (102) each have a thermal mass, and
the thermal masses of the first and second subcells differ from each other by not more than 5%, preferably 1%, of the lesser of the two thermal masses.

6. Cell according to any of Claims 1 to 4, further comprising:
a third subcell (303) which is designed for electrochemically storing electrical energy; and
a second insulating body (306) for thermally insulating the second subcell (302) and the third subcell (303) from each other, said body being arranged in an interspace between the second and third subcells that is confined by a side face (321) of the second subcell and a side face (322) of the third subcell,
wherein the second insulating body (306) comprises a second thermally insulating material (105; 205, 206) having a thermal conductivity of at most 1.0 W/(m·K) and comprises a second heating structure which is designed to heat the second subcell (302) and the third subcell (303), and
wherein the second electrical insulating body (306) is electrically insulated both from the second subcell (302) and from the third subcell (303).

7. Cell according to Claim 6, wherein the first subcell (301) and the third subcell (303) each have a thermal mass,
the thermal masses of the first and third subcells differ from each other by not more than 5%, preferably 1%, of the lesser of the two thermal masses; and
the second subcell (302) has a thermal mass which differs by not more than 5%, preferably 1%, from twice the thermal mass of the third subcell (303).

8. Cell according to Claim 6 or 7, wherein the first insulating body (304) and the second insulating body (306) have the same structural form.

9. Cell according to any of the preceding claims, wherein:
the first subcell (101; 301) and the second subcell (102; 302) each comprise: a first electrode, a second electrode, having a higher electrical potential than the first electrode, and a separator arranged between the two electrodes;
the first insulating body (103; 304) is surrounded on all sides, with the exception of one or more electrical terminals (113, 114; 313) connected to the first heating structure (107, 108; 207), by an electrolyte-stable foil (120; 220);
the electrolyte-stable foil (120; 220) electrically insulates at the same time the first insulating body (103; 304) from the first subcell (101; 301) and from the second subcell (102; 302); and
the first subcell (101; 301), the second subcell (102; 302), and the part of the first insulating body (103; 304) that is arranged in the interspace between the first and second subcells and is surrounded by the electrolyte-stable foil (120; 220) are immersed in a liquid electrolyte.

10. Cell according to any of Claims 1 to 8, wherein the first subcell (101; 301) and the second subcell (102; 302) each comprise: a first electrode, a second electrode, which has a higher electrical potential than the first electrode, and a solid-state electrolyte which is arranged between the two electrodes.

11. Cell according to any of the preceding claims, wherein the first thermally insulating material or the second thermally insulating material is of low flammability according to DIN 4102-1.

12. Cell according to any of the preceding claims, wherein the first thermally insulating material has a thermal conductivity which is less than 0.3 W/(m·K), or the second thermally insulating material has a thermal conductivity which is less than 0.3 W/(m·K).

13. Battery comprising a cell (100; 300) according to any of the preceding claims.

14. Vehicle comprising a battery according to Claim 13.

## Revendications

1. Élément de stockage électrochimique d'énergie électrique, comportant :
un premier sous-élément (101 ; 301) et un deuxième sous-élément (102 ; 302) qui sont respectivement conçus pour le stockage électrochimique d'énergie électrique ; et
un premier corps d'isolation (103 ; 304) à stabilité électrolytique, destiné à l'isolation thermique du premier sous-élément par rapport au deuxième sous-élément et qui est disposé entre le premier sous-élément et le deuxième sous-élément dans un compartiment délimité par une surface latérale (111 ; 311) du premier sous-élément et une surface latérale (112 ; 312) du deuxième sous-élément,
le premier corps d'isolation comportant un premier matériau thermiquement isolant (105 ; 205, 206) ayant une conductivité thermique d'au plus 1 W/(m·K) et une première structure chauffante qui est conçue pour chauffer le premier sous-élément (101 ; 301) et le deuxième sous-élément (102 ; 302),
le premier corps d'isolation étant électriquement isolé tant du premier sous-élément que du deuxième sous-élément,
la première structure chauffante comportant deux éléments chauffants (107, 108), le premier matériau thermiquement isolant (105) étant réalisé sous la forme d'une plaque qui présente une première surface (115) et une deuxième surface (116) opposée à la première surface,
la première surface et la deuxième surface étant respectivement opposées à l'une des surfaces latérales des premier et deuxième sous-éléments délimitant le compartiment, et
un élément chauffant (107, 108) de la première structure chauffante étant respectivement disposé sur la première surface (115) et la deuxième surface (116).

2. Élément selon la revendication 1, dans lequel l'élément chauffant disposé sur la première surface (115) recouvre au moins 50 % de la première surface ; ou l'élément chauffant disposé sur la deuxième surface (116) recouvre au moins 50 % de la deuxième surface.

3. Élément selon la revendication 2, dans lequel chaque emplacement de la première surface (115) qui n'est pas recouvert par l'élément chauffant (107) disposé sur la première surface correspond à un emplacement opposé sur la deuxième surface (116) qui est recouvert par au moins une partie de l'élément chauffant (108) disposé sur la deuxième surface.

4. Élément selon l'une quelconque des revendications précédentes, dans lequel au moins l'élément chauffant (107) disposé sur la première surface (115) comporte de l'aluminium.

5. Élément selon l'une quelconque des revendications précédentes, dans lequel le premier sous-élément (101) et le deuxième sous-élément (102) présentent respectivement une masse thermique, et
les masses thermiques des premier et deuxième sous-éléments ne diffèrent pas l'une de l'autre de plus de 5 %, de préférence de 1 %, de la plus faible des deux masses thermiques.

6. Élément selon l'une quelconque des revendications 1 à 4, comportant en outre :
un troisième sous-élément (303) qui est conçu pour le stockage électrochimique d'énergie électrique ; et
un deuxième corps d'isolation (306) destiné à l'isolation thermique du deuxième sous-élément (302) par rapport au troisième sous-élément (303) et qui est disposé entre les deuxième et troisième sous-éléments dans un compartiment délimité par une surface latérale (321) du deuxième sous-élément et une surface latérale (322) du troisième sous-élément,
le deuxième corps d'isolation (306) comportant un deuxième matériau thermiquement isolant (105 ; 205, 206) ayant une conductivité thermique d'au plus 1,0 W/(m·K) et une deuxième structure chauffante qui est conçue pour chauffer le deuxième sous-élément (302) et le troisième sous-élément (303), et
le deuxième corps d'isolation électrique (306) étant électriquement isolé tant du deuxième sous-élément (302) que du troisième sous-élément (303).

7. Élément selon la revendication 6, dans lequel le premier sous-élément (301) et le troisième sous-élément (303) présentent respectivement une masse thermique,
les masses thermiques des premier et troisième sous-éléments ne diffèrent pas l'une de l'autre de plus de 5 %, de préférence de 1 %, de la plus faible des deux masses thermiques ; et
le deuxième sous-élément (302) présente une masse thermique qui ne diffère pas de plus de 5 %, de préférence de 1 %, du double de la masse thermique du troisième sous-élément (303).

8. Élément selon la revendication 6 ou 7, dans lequel le premier corps d'isolation (304) et le deuxième corps d'isolation (306) ont une forme identique.

9. Élément selon l'une quelconque des revendications précédentes, dans lequel :
le premier sous-élément (101 ; 301) et le deuxième sous-élément (102 ; 302) présentent respectivement : une première électrode, une deuxième électrode présentant un potentiel électrique plus élevé que la première électrode, et un séparateur qui est disposé entre les deux électrodes ;
le premier corps d'isolation (103 ; 304) est entouré de tous côtés, à l'exception d'un ou de plusieurs raccordements électriques (113, 114 ; 313) reliés à la première structure chauffante (107, 108 ; 207), d'un film à stabilité électrolytique (120 ; 220) ;
le film à stabilité électrolytique (120 ; 220) isole électriquement le premier corps d'isolation (103 ; 304) tant du premier sous-élément (101 ; 301) que du deuxième sous-élément (102 ; 302) ; et
le premier sous-élément (101 ; 301), le deuxième sous-élément (102 ; 302) et la partie du premier corps d'isolation (103 ; 304) qui est disposée dans le compartiment entre les premier et deuxième sous-éléments et qui est entourée par le film à stabilité électrolytique (120 ; 220) sont plongés dans un électrolyte liquide.

10. Élément selon l'une quelconque des revendications 1 à 8, dans lequel le premier sous-élément (101 ; 301) et le deuxième sous-élément (102 ; 302) présentent respectivement : une première électrode, une deuxième électrode présentant un potentiel électrique plus élevé que la première électrode, et un électrolyte solide disposé entre les deux électrodes.

11. Élément selon l'une quelconque des revendications précédentes, dans lequel le premier matériau thermiquement isolant ou le deuxième matériau thermiquement isolant est difficilement inflammable conformément à la norme DIN 4102-1.

12. Élément selon l'une quelconque des revendications précédentes, dans lequel le premier matériau thermiquement isolant présente une conductivité thermique inférieure à 0,3 W/(m·K), ou
le deuxième matériau d'isolation thermique présente une conductivité thermique inférieure à 0,3 W/(m·K).

13. Batterie comportant un élément (100 ; 300) selon l'une quelconque des revendications précédentes.

14. Véhicule comportant une batterie selon la revendication 13.
